# EUROPÄISCHE PATENTSCHRIFT

(11) **EP 0 503 516 B1**
(45) Veröffentlichungstag und Bekanntmachung des Hinweises auf die Patenterteilung: **02.10.1996**
(21) Anmeldenummer: 92103942.6
(22) Anmeldetag: 07.03.1992
(51) Int. Cl.: C01B 15/10

(54) **Verfahren zur Verbesserung der Lagerfähigkeit von Percarbonat**
Process for improving the storage stability of percabonate
Procédé pour améliorer la stabilité en stockage de percarbonate

(30) Priorität: 13.03.1991 DE 4108043
(43) Veröffentlichungstag der Anmeldung: 16.09.1992
(73) Patentinhaber: Solvay Interox GmbH, D-30625 Hannover (DE)
(72) Erfinder: Dötsch, Werner, NL-5462 Bad Hönningen (DE)
(74) Vertreter: Lauer, Dieter, Dr.

(56) Entgegenhaltungen:
- DATABASE WPIL, Nr. 84-065 155 DERWENT PUBLICATIONS LTD., London, GB
- DATABASE WPIL, Nr. 80-29 875 DERWENT PUBLICATIONS LTD., London, GB
- DATABASE WPIL, Nr. 79-28 324 DERWENT PUBLICATIONS LTD., London, GB

## Beschreibung

Die Erfindung bezieht sich auf ein Verfahren zur Verbesserung der Lagerfähigkeit von nach an sich im Stand der Technik bekannten Verfahren hergestellten Alkalimetallcarbonat-Peroxihydraten, nachfolgend auch Percarbonate genannt, insbesondere Natriumpercarbonat.

Natriumpercarbonat wird als Bleichmittel für Wasch- und Reinigungsmittelzusammensetzungen und als Sterilisiermittel verwendet. Als Bleichmittel weist Natriumpercarbonat günstige Lösungseigenschaften bei niedrigen Temperaturen und eine hohe Bleichwirkung auf. Zwar ist Natriumpercarbonat unter gewöhnlichen Bedingungen eine an sich chemisch beständige Verbindung, jedoch neigt es andererseits bei längerer Lagerung, insbesondere unter dem Einfluß von Luftfeuchtigkeit, zur Rekristallisation unter Bildung kleiner, nadelförmiger Kristallite, die leicht ineinander verfilzen. Diese Rekristallisation während der Lagerung führt zu Verbackungen (caking), die darüber hinaus verstärkt werden, wenn das zu lagernde Natriumpercarbonat zusätzlich einer Druckbelastung bei Lagerung ausgesetzt ist. Die Verbackungen können hierbei ein solches Ausmaß annehmen, daß ein ursprünglich freifließendes, nach an sich bekannten Verfahren des Standes der Technik hergestelltes Natriumpercarbonat regelrecht zu einem Block erhärtet. Natriumpercarbonat ist daher nicht für die Lagerung in Silos geeignet, da die Rekristallisation und Verbackung unter den hierfür notwendigen Lagerbedingungen (Luftaustausch; Eigendruck von höher liegendem Lagergut auf tiefer liegendes Lagergut) besonders leicht auftreten und der gesamte Silo blockiert wird. In der Praxis wird daher Natriumpercarbonat nach der Herstellung in großen Säcken mit einem Fassungsvermögen von etwa 1000 kg (big bags) gesammelt und in diesen beim Hersteller bis zur Auslieferung zwischengelagert, wobei die big bags zur Vermeidung von Druckeinwirkung auf das Natriumpercarbonat allenfalls in zwei Lagen gestapelt werden dürfen. Aber auch bei dieser Art der Zwischenlagerung lassen sich Rekristallisation und die Verbackung des Natriumpercarbonates nicht verhindern. Um ein freifließendes Produkt sicherzustellen, müssen daher vor der Auslieferung an Abnehmer die big bags entleert und die durch Verbackungen gebildeten Agglomerate von Natriumpercarbonat zerkleinert und das derart behandelte Produkt neu abgepackt werden. Es versteht sich hierbei von selbst, daß eine derartige Prozedur, umfassend das Umpacken und Zerbrechen der Natriumpercarbonat-Kristallite, äußerst zeit- und kostenaufwendig ist.

Durch die bisherigen im Stand der Technik bekannten Verfahren zur chemischen Stabilisierung von Natriumpercarbonat, beispielsweise durch das Einbringen von geeigneten Stabilisatoren während der Herstellung des Percarbonates aus Soda und Wasserstoffperoxid bzw. durch das nachträgliche Beschichten mit geeigneten Beschichtungsmaterialien wie z.B. Borsäure, Borate, Magnesiumsilikate usw. wird im Hinblick auf das hier vorliegende Problem keine wesentliche Verbesserung erzielt. Beispielsweise ist aus EP-A-407189 eine Stabilisierung durch Inkorporation einer Mono- oder Dicarbonsäure (einschließlich Salze davon) und eines weiteren anorganischen Salzes bekannt. Zwar stabilisieren die während des Herstellungsprozesses zugesetzten Stabilisatoren, die in das Natriumpercarbonat inkorporiert werden, das Natriumpercarbonat weitgehend in chemischer Hinsicht, dennoch läßt sich die Rekristallisation hierdurch nicht unterbinden. Darüber hinaus führt die mit der Rekristallisation verbundene Umlagerung von Kristallwasser auch zu einer Teilanlösung des Natriumpercarbonates, wobei erhöhte pH-Werte auftreten können, die zusätzliche Zersetzung des Natriumpercarbonates bedingen. Auch durch die im Stand der Technik an sich üblichen Beschichtungsverfahren (coating) lassen sich die Rekristallilsation und das Verbacken nicht unterdrücken. Darüber hinaus ist das Beschichten von Percarbonat-Partikeln auch schwierig, da für eine erfolgreiche Beschichtung dieser Partikel eine ausreichend glatte und gleichmäßige Oberfläche, die möglichst frei ist von Spitzen und nadelförmigen Erhebungen, notwendig ist.

Es bestand daher die Aufgabe, die Nachteile des Standes der Technik durch die Verbesserung der Lagerfähigkeit von Percarbonaten zu beheben und ein hierfür geeignetes effektives Verfahren anzugeben.

Erfindungsgemäß wird die Aufgabe gelöst durch ein Verfahren zur Herstellung eines Percarbonat-Produktes mit verbesserter Lagerstabilität, welches sich dadurch auszeichnet, daß man Percarbonat-Partikel mit einer zur Verbesserung der Lagerstabilität wirksamen Menge eines pulverförmigen Fettsäuremetallsalzes vermischt. Die Percarbonat-Partikel sind mit einer auf das Percarbonat-Produkt bezogenen Menge von 0,05 bis 3 Gew.-%, vorzugsweise von 0,1 bis 1,5 Gew.-% des Fettsäuremetallsalzes vermischt.

In einer zweckmäßigen Ausgestaltung des erfindungsgemäßen Verfahrens werden als Fettsäuremetallsalze Alkali- und/oder Erdalkalimetallsalze von längerkettigen gesättigten Fettsäuren, welche vorzugsweise unverzweigt sind und bis zu 18 Kohlenstoffatome, insbesondere 16 - 18 Kohlenstoffatome enthalten können, eingesetzt. Als besonders günstig erweisen sich Salze der Stearinsäure. Bevorzugt setzt man als vorstehende Fettsäuremetallsalze diejenigen der Alkali- und/oder Erdalkalimetalle der zweiten und dritten Periode des Periodensystems der Elemente, insbesondere aber diejenigen von Natrium, Kalium oder Magnesium ein. Ganz besonders bevorzugt wird als Fettsäuremetallsalz Magnesiumstearat im erfindungsgemäßen Verfahren eingsetzt.

Durch die vorliegende Erfindung wird ein effektives, d.h. ein einfaches, praxisgerechtes, wirtschaftliches und wirkungsvolles Verfahren zur Verbesserung der Lagerstabilität von Percarbonaten, insbesondere von Natriumpercarbonat zur Verfügung gestellt. Die Rekristallisation und/oder das Verbacken von Percarbonat werden durch das erfindungsgemäße Verfahren nicht nur über kurze Zeiträume einer Zwischenlagerung, sondern auch über lange Zeiträume von Monaten bis hin zu über einem Jahr sehr wirkungsvoll unterdrückt. Erfindungsgemäß stabilisierte Percarbonat-Produkte sind auch nach langen Lagerzeiträumen nahezu verbackungsfrei und lassen sich ohne Probleme bezüglich einer Klumpenbildung (Verbacken) der weiteren Verwendung zuführen.

Durch das erfindungsgemäße Verfahren werden neue, sehr vorteilhafte stabilisierte Percarbonat-Produkte bereitgestellt. Die Erfindung betrifft daher auch diese Percarbonat-Produkte, die sich dadurch auszeichnen, daß sie im wesentlichen aus einer Mischung von gegebenenfalls Aktivsauerstoffstabilisator enthaltenden und/oder gegebenenfalls beschichteten Natriumpercarbonat-Partikeln und von einer zur Verbesserung der Lagerstabilität wirksamen Menge eines pulverförmigen Fettsäuremetallsalzes bestehen. Zweckmäßige erfindungsgemäße Percarbonat-Produkte bestehen im wesentlichen aus 99,95 bis 97,0 Gew.-%, vorzugsweise 99,9 bis 98,5 Gew.-% der Natriumpercarbonat-Partikel und aus 0,05 bis 3,0 Gew.-%, vorzugsweise 0,1 bis 1,5 Gew.-% des pulverförmigen Fettsäuremetallsalzes. Als Fettsäuremetallsalze können hierbei die oben im Zusammenhang mit dem erfindungsgemäßen Verfahren beschriebenen Alkali- und/oder Erdalkalimetallsalze von Fettsäuren in den erfindungsgemäßen Percarbonat-Produkten enthalten sein, wobei insbesondere das Magnesiumstereat besonders bevorzugt ist.

Die nachfolgenden Beispiele sollen die Erfindung weiter erläutern, ohne sie jedoch in ihrem Umfange zu beschränken.

### Beispiel 1:

Die Lagerfähigkeit von Natriumpercarbonat (PCS) wurde an PCS-Proben, denen unterschiedliche Mengen an pulverförmigen Magnesiumstearat bzw. Natriumstearat zugemischt wurden, durch Drucklagerversuche anhand des nachfolgend beschriebenen Standarttests untersucht. Zum Vergleich wurde analog eine nicht erfindungsgemäß stabilisierte PCS-Probe getestet.

### Prinzip:

Die Lagerfähigkeit von PCS wurde bei vorgegebenem Druck, erhöhter Temperatur und eingestellter relativer Luftfeuchtigkeit getestet.

### Geräte:

- Klimakasten mit der Möglichkeit, die Temperatur auf 310 °K und die relative Luftfeuchtigkeit auf 60 bis 70 % einzustellen.
- Preßform zur Silo-Simulation. Die Preßform bestand aus 2 senkrecht auf dem Preßformboden angeordneten, zerlegbaren Aluminium-Halbschalen, die während des Tests durch 2 Ringe fest miteinander verbunden wurden. Der aus den Halbschalen gebildete Rohrkörper der Preßform wies einen inneren Durchmesser von 40 mm und eine Füllhöhe von 60 mm auf; bis zu einer Höhe von etwa 28 mm waren 20 kleine Löcher mit einem Durchmesser von 2 mm gebohrt. Zur Kopfseite hin wurde die Preßform zum Zweck der Druckausübung durch einen als Stempel ausgebildeten Pressformdeckel abgeschlossen. Dieser Pressformdeckel war ein Zylinder mit 39 mm Durchmesser und einer Höhe von 35 mm, an dessen Oberseite eine kreisförmige Belastungsfläche mit einem Durchmesser von 100 mm zur Aufnahme von Belastungsgewichten angeordnet war.
- Belastungsmeßgerät zur Messung des Druckes, der aufgewendet werden muß, um eine in der vorstehenden Preßform verdichtete Probe von Natriumpercarbonat zu zerdrücken.

### Durchführung:

Die innere Wandung der Preßform wurde bis zur Höhe der kleinen Löcher mit wasserdampfdurchlässigem Papier ausgekleidet. Die Preßform wurde dann zu zwei Dritteln mit der zu testenden Natriumpercarbonat-Probe gefüllt. Der Pressformdeckel wurde aufgesetzt und die Probe bei vorgewählter Temperatur (310 °K), einer relativen Luftfeuchtigkeit von 60 bis 70 % und einem vorgewähltem Druck (aufgelegte Masse von 25 kg) über einen Zeitraum von 16 Tagen belastet. Danach wurde die Preßform zerlegt und die verdichtete Natriumpercarbonat-Probe zu einem Quader von 2 x 3 cm Kantenlänge geschnitten. Unter dem Belastungsmeßgerät wurde danach der Druck eingestellt, bei dem dieser Quader zerdrückt werden konnte. Der zum Zerdrücken des Quaders aufzuwendende Druck in kg/cm² ist ein direktes Maß für die Verbackung der Natriumpercarbonat-Probe.

Nach dem vorstehenden Drucklagertest mußte für eine Natriumpercarbonat-Probe, die nicht erfindungsgemäß stabilisiert war, ein Druck von 250 g/cm² aufgewendet werden, um den Quader aus verdichtetem Natriumpercarbonat zu zerdrücken.

Demgegenüber waren Natriumpercarbonat-Proben, denen erfindungsgemäß 0,125 Gew.-%, 0,25 Gew.-%, 0,5 Gew.-% bzw. 1 Gew.-% Magnesiumstearat oder 0,25 Gew.-% bzw. 0,5 Gew.-% Natriumstearat zugemischt waren, so gut gegen Rekristallisation und Verbackung stabilisiert, daß die Verbackung dieser erfindungsgemäß stabilisierten PCS-Proben im Belastungsmeßgerät nicht gemessen werden konnten, da nach Beendigung der oben beschriebenen Druckbelastung der erfindungsgemäß stabilisierten PCS-Proben in der Pressform noch ein freifließendes Natriumpercarbonat-Produkt vorlag. In den erfindungsgemäß stabilisierten PCS-Proben hatte während der Druckbelastung in der Pressform so gut wie keine Verdichtung stattgefunden und nach Beendigung der Druckbelastung war in den erfindungsgemäß stabilisierten Proben eine nur leichte Klumpenbildung nachweisbar.

### Beispiel 2

In einem Betriebsversuch wurde Natriumpercarbonat aus laufender Produktion beim Abfüllen in big bags (Säcke mit Fassungsvermögen von 1000 kg) mit 0,5 Gew.-% Magnesiumstearat vermischt und die gefüllten big bags zweilagig gelagert. Die Entleerung eines ersten Teils der big bags nach einer Lagerzeit von einem halben Jahr und eines zweiten Teiles der big bags nach einer Lagerzeit von eineinhalb Jahren zeigte, daß das erfindungsgemäß stabilisierte Natriumpercarbonat sowohl aus big bags aus der oberen Lage als auch aus der unteren Lage keine störenden Verbackungen aufwiesen und sich ohne Probleme bezüglich einer Klumpenbildung entleeren ließen.

## Patentansprüche

1. Verfahren zur Erhöhung der Stabilität von Partikeln eines Alkalimetallcarbonat-Peroxohydrat-Produktes gegen Verbackung bei der Lagerung in Silos oder großen Packsäcken, bei welchem man die in üblicher Weise hergestellten, freifließenden Alkalimetallcarbonat-Peroxyhydrat-Partikel mit einer auf das Alkalimetallcarbonat-Peroxyhydrat-Produkt bezogenen Menge von 0,05 bis 3 Gew.-% eines pulverförmigen Fettsäuremetallsalzes vermischt.

2. Verfahren nach Anspruch 1, dadurch gekennzeichnet, daß man die Alkalimetallcarbonat-Peroxyhydrat-Partikel mit einer auf das Alkalimetallcarbonat-Peroxyhydrat-Produkt bezogenen Menge von 0,1 bis 1,5 Gew.-% des Fettsäuremetallsalzes vermischt.

3. Verfahren nach Anspruch 1, dadurch gekennzeichnet, daß man als Fettsäuremetallsalz Alkali- und/oder Erdalkalimetallsalze der Fettsäuren, vorzugsweise der Stearinsäure, einsetzt.

4. Verfahren nach Anspruch 3, dadurch gekennzeichnet, daß man Fettsäuremetallsalze der Alkali- und/oder Erdalkalimetalle Natrium, Kalium oder Magnesium einsetzt.

5. Verfahren nach Anspruch 4, dadurch gekennzeichnet, daß man als Fettsäuremetallsalz Magnesiumstearat einsetzt.

6. Alkalimetallcarbonat-Peroxyhydrat-Produkt, dessen Alkalimetallcarbonat-Peroxyhydrat-Partikel eine erhöhte Stabilität gegen Verbackung bei der Lagerung in Silos oder großen Packsäcken aufweisen, dadurch gekennzeichnet, daß es aus einer Mischung von 97,0 bis 99,95 Gew.-%, vorzugsweise 98,5 bis 99,9 Gew.-%, von in üblicher Weise hergestellten, freifließenden Alkalimetallcarbonat-Peroxyhydrat-Partikeln und 0,05 bis 3,0 Gew.-%, vorzugsweise 0,1 bis 1,5 Gew.-% eines pulverförmigen Fettsäuremetallsalz besteht.

## Claims

1. Process for enhancement of the stability of particles of an alkali metal carbonate peroxyhydrate product against the caking during the storage in silos or in big bags, in that process conventionally manufactured free-flowing alkali metal carbonate peroxyhydrate particles are mixed with a fatty acid metal salt in powder form in a quantity of 0.05 to 3% by weight, based on the alkali metal carbonate peroxyhydrate product.

2. Process according to claim 1 characterised in that the alkali metal carbonate peroxyhydrate particles are mixed with a quantity of fatty acid metal salt of 0.1 to 1.5% by weight, based on the alkali metal carbonate peroxyhydrate product.

3. Process according to claim 1 characterised in that alkali and/or alkaline earth metal salts of the fatty acids, preferably stearic acid, are used as fatty acid metal salt.

4. Process according to claim 3 characterised in that fatty acid metal salts of the alkali and/or alkaline earth metals sodium, potassium, magnesium or calcium are used.

5. Process according to claim 4 characterised in that magnesium stearate is used as fatty acid metal salt.

6. Alkali metal carbonate peroxyhydrate product, the alkali metal carbonate peroxyhydrate particles therein are showing enhanced stability against caking during the storage in silos or big bags, characterised in that the product consists of a mixture of 97.0 to 99.95% by weight, preferably 98.5 to 99.9% by weight, of conventionally manufactured free-flowing alkali metal carbonate peroxyhydrate particles and 0.05 to 3.0% by weight, preferably 0.1 to 1.5% by weight of fatty acid metal salt in powder form.

## Revendications

1. Procédé pour l'amélioration de la stabilité de particules d'un peroxyhydrate de carbonate de métal alcalin contre la prise en masse pendant le stockage en silos ou en grands sacs d'emballage, dans lequel on mélange les particules de peroxyhydrate de carbonate de métal alcalin s'écoulant librement, produites par une méthode traditionnelle, avec une quantité de 0,05 à 3 % en poids, par rapport au peroxyhydrate de carbonate de métal alcalin, d'un sel métallique d'acide gras en poudre.

2. Procédé selon la revendication 1, dans lequel on mélange les particules de peroxyhydrate de carbonate de métal alcalin avec une quantité de 0,1 à 1,5 % en poids, par rapport au peroxyhydrate de carbonate de métal alcalin, de sel métallique d'acide gras.

3. Procédé selon la revendication 1, dans lequel on utilise, comme sel métallique d'acide gras, un sel de métal alcalin et/ou alcalino-terreux d'acide gras, de préférence de l'acide stéarique.

4. Procédé selon la revendication 3, dans lequel on utilise des sels métalliques d'acide gras des métaux alcalins et/ou alcalino-terreux sodium, potassium ou magnésium

5. Procédé selon la revendication 4, dans lequel on utilise le stéarate de magnésium comme sel métallique d'acide gras.

6. Composé de peroxyhydrate de carbonate de métal alcalin, dont les particules présentent une stabilité améliorée contre la prise en masse pendant le stockage en silos ou en grands sacs d'emballage, caractérisé en ce qu'il consiste en un mélange de 97,0 à 99,95 % en poids, de préférence de 98,5 à 99,9% en poids, de particules de peroxyhydrate de carbonate de métal alcalin s'écoulant librement, produites par une méthode traditionnelle, et de 0,05 à 3,0 % en poids, de préférence de 0,1 à 1,5 % en poids, d'un sel métallique d'acide gras en poudre.
